# EUROPEAN PATENT SPECIFICATION

(11) **EP 2 366 936 B1**
(45) Date of publication and mention of the grant of the patent: **06.05.2015**
(21) Application number: 10156898.8
(22) Date of filing: 18.03.2010
(51) Int. Cl.: F16L 55/168, F16L 58/10

(54) **Method of repairing a pipe coating**
Procédé de réparation de revêtement de tuyau
Verfahren zur Reparatur einer Leitungsbeschichtung

(43) Date of publication of application: 21.09.2011
(73) Proprietor: Borealis AG, 1220 Wien (AT)
(72) Inventor: Leidén, Leif, 06101 Porvoo (FI); Purmonen, Jouni, 06101 Porvoo (FI); Ollikainen, Andrei, 06101 Porvoo (FI)
(74) Representative: Seppo Laine Oy

(56) References cited:
- EP-A1- 1 985 909
- WO-A2-98/06511
- US-A- 6 149 969
- US-A1- 2007 034 316

## Description

### Field of the Invention

The invention relates to coating of pipes. In particular, the invention relates to repairing polymeric factory and/or field coatings of steel pipes. Such pipes can be used for terrestrial or underwater long distance transport of fluids, in particular oil, water and natural gas.

### Background of the Invention

Steel pipes are provided with a polymeric factory coating (FC) layer at a pipe factory in order to protect the pipe against mechanical damages and corrosion. After the pipes have been welded together in order to form a pipeline, the pipe joint area has to be coated with a polymeric layer in order to provide protection for the joint area too. This process is called filed field joint coating (FJC). Typically, in both these processes at least two layers of polymer are used, namely a precoat (primer) layer and a topcoat layer.

Due to handling, transportation and assembling of the pipes, damages will occur to the factory and field coatings. Such damages may be smaller or bigger and less or more severe, but in most cases need to be repaired in order to ensure proper protection of the pipe for the whole intended lifetime of the pipeline.

According to the international standard for field joint coatings ISO 21809-3 a vast number of repair solutions are mentioned such as coextruded patches. The precoat layer is most often a mastic or hot-melt which represents the adherence layer. In addition, there is a PEX top coat. Also shrinkable coat solutions are known, these being made typically from PE or a blend of PP and PEX. Most often these patches are used together with a liquid, one or two component primer. Also a number of other solutions are used such as; PUR paint, bitumen, asphalt enamel and so on.

None of the solutions suggested this far are in line with the 3-layer factory coating in terms of quality. Thus, the patch area remains much weaker than the original coating. This is particularly true for very strong factory coatings where, for example, powder epoxy, grafted adhesive and bimodal HDPE are used. In particular peel strength (PS) values are not even nearly in line with corresponding values of the factory coating. This is mostly due to the fact that a bevel and overlap zone of the damaged area are heated using a gas torch or hot blown air onto a non-protected polyolefin (PO) coating. Heavy heating damages the surface of the PO very quickly. In addition, the patch precoating (primer) epoxy is applied onto the factory coating on which the adherence is low.

Further factors which are not well taken into account by current patching techniques are the layer thickness of the factory coating and the overlap zone. Problems may arise in particular in the case of prefabricated patches, whose size and thickness are fixed and seldom in line with the factory coating. Overlap of the patch and the factory coating gives poor bonds and very negative result in particular using a so-called horizontal drilling technique or on spool-yards, where movement of the pipe is necessary during installation.Horizontal drilling means a situation where there is a pre-drilled hole through the ground, under roads, farming land, rivers, swamps etc. After this operation a prefabricated pipeline (several pipes welded together and their joints protected) is pulled through the ground in order to avoid an open trench.

US 2007/0034316 Al discloses in Figure 4 and related text portions an example of a pipe repair technique in which a polyolefin patch is applied onto the damaged area such that it overlaps the factory coating. The patch comprises curable crosslinkable epoxy resin, the resin optionally being free of added epoxy curative, and a fully prepolymerized, uncrosslinked, crosslinkable, or crosslinked polyolefin polymer. The patch is applied on a partly or fully cured fusion-bonded epoxy layer. The epoxy-containing patch bonds to the epoxy layer thus, forming a interpenetrating polymer network (IPN).

EP 444446 discloses a polypropylene-based pipe coating repair process. The patch comprises from 59% to 94% of polypropylene, propylene/ethylene random copolymer, propylene/ethylene/1-butene random copolymer or mixtures thereof with one or more plastomeric polymers selected from the group consisting of ethylenelvinyl acetate copolymers, LDPE, HDPE, polyamides and polyurethane; from 5% to 40% of a polymer or a mixture of elastomeric polymers selected from the group consisting of EPR, EPDM, SEBS block copolymer, SBS block copolymers and ethylenelethyl acrylate copolymer; from 1% to 10% of polypropylene modified with from 1 to 10% of maleic anhydride, isophorone bismaleamic acid or acrylic acid; and from 0% to 3% of carbon black. The patch is applied such that it overlaps with the factory coating of the pipe and is applied in several thin layers in order to achieve the desired coating thickness. Thus, also the thickness of the overlap area increases which is not desired.

Other prior art methods for pipe coating and/or reparation are disclosed in e.g. WO 93/00214 and WO 90/12235.

### Summary of the Invention

It is an aim of the invention to provide a repair process and patch materials which solve at least part of the above problems. In particular it is an aim to provide a method by which stronger repairs can be produced to factory coated damaged pipes.

According to one aspect of the invention these aims are achieved by the method as hereinafter disclosed and more specifically defined in claim 1.

The present method is directed to repairing the coating of a pipe having a pipe frame and a polymeric coat around the pipe frame, the polymeric coat comprising a damaged area to be repaired. The method comprises
- preparing the pipe for repair by locally removing coating around the damaged area of the polymeric coat for obtaining a repair zone,
- heating the pipe at the repair zone to a temperature above the melting temperature of the polymeric coat,
- applying to the heated repair zone pre-heated adhesive polymer material covering the entire repair zone whereby the adhesive polymer material bonds to the steel pipe directly or through a an epoxy precoat which may optionally be applied onto the steel, and
- cooling the repair zone,
- wherein the adhesive polymer material (36; 46) comprises ethylene homo- or copolymers containing at least 90 % by mole of ethylene units, and
- the adhesive polymer material is provided in the form of a pre-shaped patchhaving its shape, dimensions and layer thickness matching the repair zone with essentially no overlap with the polymeric coat of the pipe to be repaired.

The term "adhesive polymer material" refers to polyolefin-containing material capable of covering the repair zone and affixing to the pipe surface or the epoxy precoat layer. The adhesive polymer material may be a single-layer entity comprising an adhesive layer only or a multi-layer entity, in particular a two-layer entity comprising an adhesive layer innermost and one or more topcoat layers.

Pre-shaped elements can be obtained by cutting from a topcoat of a second pipe provided with a second polymeric topcoat wherein the bonding of the topcoat to the pipe frame is weaker than that of the pipe to be repaired in order to facilitate detachment of the topcoat. A process for achieving this is explained later in more detail. Thus, not only the composition of the patch but also its geometrical shape, in particular lateral dimensions and/or curvature may readily correspond to the shape of the pipe to be repaired.According to a preferred embodiment, the adhesive layer comprises modified polyethylene in an amount of at least 90 %. Preferably, the modified polyethylene comprises
i. from 50 to 90 % by weight, preferably from 60 to 80 % by weight of a polymer selected from homopolymers of ethylene, copolymers of ethylene and C₄ to C₁₀ alpha-olefins having a density from about 900 to 970 kg/m³, and mixtures thereof; and
ii. from 10 to 50 % by weight of an elastomer, which preferably is a copolymer of ethylene and one or more comonomers selected from C₃ to C₁₀ alpha-olefins, acrylates, methacrylates, acetates, cyclic olefins, C₆ to C₁₂ dienes and C₆ to C₁₂ trienes.

Optionally, the modified polyethylene may comprise also
iii. no more than 10 % by weight of conventional additives, pigments and fillers known in the art:

According to a preferred embodiment, the blend of (i) and (ii) or one of said components is grafted with an unsaturated carboxylic acid in the presence of a free-radical generator, such as peroxide.

According to one embodiment, the adhesive polymer material comprises an adhesive layer made from the material described above and a topcoat layer comprising at least 90 % of
a) low density polyethylene produced in a high pressure process,
b) a copolymer of ethylene and C₄ to C₁₀ alpha-olefins having a density from about 915 to 970 kg/m³,
c) a mixture of (a) and (b), or
d) a mixture comprising from 10 to 90 % by weight of (a), (b) or (c) and from 90 to 10 % of a modified polyethylene as defined above (items i and ii and, optionally, iii); and,
e) optionally, no more than 10 % of conventional additives, pigments and fillers known in the art.

The top coat layer of the polymer material may comprise a multimodal ethylene copolymer having a density from 935 to 955 kg/m³, a melt index MFR₂ of from 0.3 to 3.0 g/10 min, and MFR₂₁/MFR₅ of from 15 to 35.

The adhesive polymer material and the top coat are preferably free from fibrous fillers and fibrous additives as these may significantly weaken the adhesion of the material to the pipe.

According to one embodiment, the adhesive polymer material is manufactured from essentially the same material as the polymeric topcoat for factory coating or field joint coating concerned. The term "essentially the same material" means that the chemical compositions of the materials are the same within ordinary manufacturing tolerances. In particular, the polymeric formulae and polymer mixture ratios (where applicable) are the same. Thus the mechanical composition, i.e. layer thickness and potential sublayer structures, are the same. The pipe frame is typically a steel pipe frame. The polymeric topcoat of the pipe typically comprises polyolefin.

The invention is suitable in particular for cases where both the adhesive polymer material and the factory coating of the pipe comprise a coextruded sheet comprising an adhesive polymer layer and a polyolefin topcoat layer. Alternatively, the adhesive polymer material may be applied as a sheet made of a reactive polymer, notwithstanding the structure of the factory coating. However, other options are available too.

According to one embodiment, the method comprises the steps of
- heating the pipe frame at the repair zone to 160 - 200 °C,
- heating the adhesive polymer material to at least 150-200 °C,
- applying the adhesive polymer material to the heated repair zone, and

subjecting pressure on the adhesive polymer material to ensure bonding of the adhesive polymer material to the pipe frame and to the polymeric topcoat. Applying pressure to the adhesive polymer material ensures good contact, even polymer displacement and satisfactory chemical bonding of the adhesive polymer material both to the steel or precoat and edges of the topcoat. As shortly mentioned above, according to a preferred embodiment, a precoat, in particular an epoxy precoat in powder form, is applied to the heated pipe before application of the adhesive polymer material. Epoxy precoats and their application techniques are known to a skilled person from factory coating processes. In one embodiment of the present method, the precoat is applied only to the exposed steel portion and not onto the edges or bevels of the factory coat or field joint coat which is being repaired. Thus, even when using a precoat, the polymer-polymer bonds at the interface of the adhesive polymer material and the original coat of the pipe are of maximum strength.

According to one embodiment, a two-step heating scheme is utilized. In the case of a reactive topcoat, such method comprises
- heating the pipe frame at the repair zone to a first temperature less than 150 °C, preferably 120 - 140°C,
- applying an epoxy precoat to the pipe at the repair zone,
- applying a reactive or coextruded patch on the epoxy precoat,
- continuing heating of the pipe frame to a second temperature above 15 °C, preferably 160 -200 °C, in order to fully cure the epoxy precoat and bond the reactive patch or coextruded patch to the precoat and to the topcoat of the pipe.

The use of powder epoxy is recommended in order to ensure similar peel strength performance as that of the factory coating.

Preparation of the repair zone around the damaged area is necessary for achieving a good repair. The preparation preferably comprises cutting the repair zone into regular form (such as a rectangle, triangle, ellipse, circle or polygon), bevelling of the topcoat edges of the repair zone, and ensuring suitable roughness profile of the steel surface. The bevels may be e.g. 10 - 45°, preferably about 30°, with respect to the normal of the pipe surface.

Even better repair result is achieved if the heated repair zone is actively cooled after application of the adhesive polymer material, for example by using cool fluid.

The thickness of the adhesive polymer material, as well as that of its potential sub-layers (such as epoxy and powder adhesive), are preferably the same as in the coating of the pipe to be repaired (with 10 % precision). Because of this, no overlap of the adhesive polymer material onto the factory coating is required which eliminates risks for delamination in particular during horizontal drilling and on spool-bases.

Heating of the steel-pipe (repair-area) can be carried out using several methods. The primary method include
- gas torch heating the pipe frame from the inside of the pipe, and/or
- inductive heating the pipe frame from the inside or outside of the pipe,
and optionally, as secondary/additional heating, hot air blow heating or infrared heating. The secondary heating may be directed to the polymeric topcoat in the vicinity of the repair zone, as the topcoat may not heat enough through conduction from the steel for strong polymer-polymer bonds to form. It is preferred to raise the surface temperature of the topcoat to at least 110 °C, which is sufficient for PE-containing topcoats.

Heating of the adhesive polymer material, if applied in patch form, is preferably carried out in an oven.

The two main options for the coating material are a co-extruded sheet comprising two layers made of different polymers, such as MaH grafted adhesive layer and a PE-containing topping layer. Another option is a reactive material, typically one layer reactive top coat. Both can be provided as prefabricated patches or *in situ* extruded patches. The benefit of prefabrication (in particular coextruded sheets) is that the dimensions and curvature of the patch can be made to exactly match those of the repair area before the application of the patch. The benefit of *in situ* extrusion is that the reactivity of the adhesive polymer material is at maximum just after extrusion and thus firm bonding takes place. Layer thickness in both cases will be the same as for factory coating as the coater or extruder can make them according to specification of the factory coating of the pipe type concerned.

According to one embodiment the repair patches are cut from a bigger sheet depending on the size of the damage and thus the size of the prepared repair zone.

The PE-based polymers according to the invention are capable of forming a good bond to factory coating at the edges of the repair zone and no overlap of the polymer material is required onto the factory coating. This is particularly true in cases where the factory coating material and the repair material are the same because the polymer welds extremely well to itself in the presence of heat. Thus, also secondary aims of the invention, namely to achieve a repair method whose resulting patch quality is comparable to factory coatings of pipes and a repair method suitable for field conditions are achieved.

Advantageous embodiments of the invention which are the subject of dependent claims and the following detailed description.

The invention offers significant benefits. The most important benefit is the quality and performance of the repaired area of the pipe which is in line with the quality and performance of high-quality and high-strength factory coatings. At the same time, the risk of undesired deterioration of the patch due to un-predictable short or long term interaction of different materials is reduced. Thus, a whole pipeline can be made of high quality materials and coating techniques without weak links.

The peel strength of the patch manufactured according to the invention, as well as other quality criteria have been verified to satisfy not only the standard for repairs, but also the standard for the factory coating itself. This provides the pipeline manufacturer/owner great confidence.

In more detail, the peel strength of the present patches is well above 250 N/cm whereas the peel strength of the state of the art Dirax (by Reichem) patches has been measured to be less than 180 N/cm in similar conditions (applied using epoxy precoat and measured at room temperature). Dirax patches are applied using shrinking sleeves and their weldability to the factory coating is relatively poor, presumably at least partly due to fiber reinforcements used in the patch.

Complete compatibility is guaranteed by utilizing materials and manufacturing techniques disclosed in detail later in this document. In particular the use of inductive heating provides an even temperature and no damages to the factory coating as only the steel is heated to a high temperature. Indeed, the repair processes are always prone to damages caused by the repair process itself. Such damages include de-lamination and decomposition of the factory coating due to too high temperature. Using the present process, such risks can be practically eliminated.

Instead of in addition to inductive heating, preferably from the outside of the pipe, gas torch heating can be utilized from the inside of the pipe. This eliminates the risk of burning the factory coating.

The scratch resistance of the patch has been measured to be 3-4 times better compared with conventional solutions and at least two times better than state of the art patches (Dirax by Reichem). The repair material can be manufactured by any provider, in particular pipe coater, whereby there is no need to buy from some source. A system can be designed where the customers of a pipe manufacturer can make the repair patches themselves according to need. The present technique and patches can be easily used both in the pipe mill and even more importantly, on the field.

To summarize, embodiments of the invention cover the following versions of the patching technique.
- 3-layer repair: 2 layers of polymer as coextruded coat and utilization of epoxy precoat (primary solution)
- 2-layer repair A: a reactive coat on epoxy precoat (patch or extruded)
- 2-layer repair B: 2 layers of polymer applied directly to the pipe as coextruded coat
- 1-layer repair: a reactive coat applied directly to steel (patch or extruded)
- Any of the above together with an additional adhesive layer in molten, patch or powder form between the pipe frame or precoat (if applicable) and the coat

According to one aspect of the invention, the patched area is actively cooled from the inside of the pipe after application of the patch in order to increase the adhesion of the patch. In fact, the cooling seems to produce a strong bond between the adhesive and the steel pipe even in the absence of the epoxy layer, which allows for a simplified repair process to be used.

It is advantageous to start the cooling expressly from the inside; as in this way the most critical part of the patch, namely the steel/polyolefin (or epoxy/polyolefin) interface is cooled fast. The cooling effect proceeds towards the outer surface of the patch. Alternatively, cooling can initially also be started from outside (on top of patch) until a temperature below the melting temperature of the adhesive polymer is achieved. However, after that, the internal cooling is applied in order to achieve the best bonding results.

The internal cooling may be applied by bringing the heated internal surface of the pipe in contact with a liquid or solid material having a temperature which is at least 50 °C lower than the temperature to which the pipe surface was heated or by blowing air or other gas having a temperature of no more than 30 °C to the pipe surface.

In fact, it has been found that the internal cooling described above also works with other than PE-containing polyolefin patches, such as PP-containing patches. Thus, this aspect may be divided into a divisional application in which the patch is manufactured from any polyolefin-containing material, in particular modified polyolefin containing-material. Examples of suitable PP polymers are disclosed in EP 1 911 825 A1 and in the product data sheet of BB108E-1199 belonging to the Borcoat(TM) family by Borealis group. Examples of suitable PE-containing materials are given in the following detailed description.

### Brief Description of the Drawings

Fig. 1 shows schematically a pipe with two damaged areas.
Fig. 2 illustrates in a perspective view a repair zone prepared for the application of a patch.
Figs 3A, 3B and 4 show in a cross-sectional view different embodiments of the present repair technique.
Fig. 5 shows a flow chart of the method according to one embodiment of the invention.

### Detailed Description of Embodiments

Advantageous repair procedures according to the invention are described below, as well as various alternatives of individual steps.

### Preparation of the modified polyolefine

Modified polyethylene having desired adhesion properties and suitable to be used in the present method can be manufactured by grafting the polymers (i) and (ii) listed above in the Summary of the Invention section, or one of said components, with an unsaturated carboxylic acid, typically in the presence of a free-radical generator, such as peroxide. One possible process of producing such modified polyethylene is described in detail in EP 1316598 A1 and is not repeated here.

Other examples of such polymers are disclosed in enabling manner in EP 837 915 B1, EP 1 865 037 A1, EP 2 072 586 A1, EP 2 072 587 A1, EP 2 072 588 A1 and EP 2 072 589 A1. Such polymers are commercially available in the Borcoat(TM) family by Borealis group.

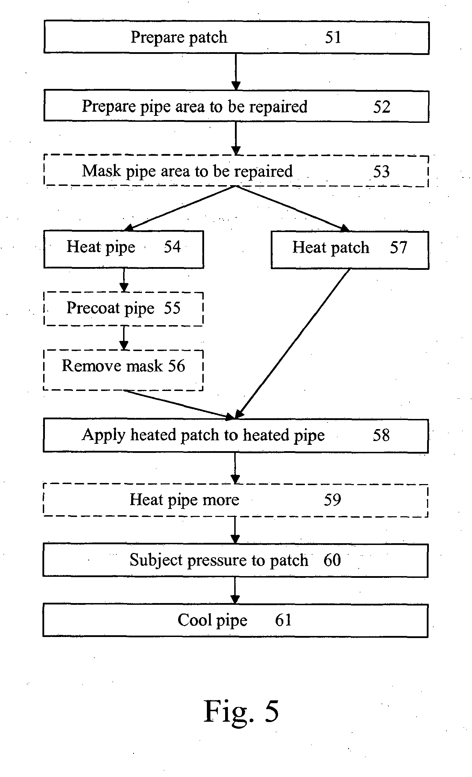

### Preparation of the patch (coextruded or reactive patch) Fig. 5, step 51)

The preparation of the patch is made utilizing a 'spare' pipe which is coated similarly to the pipe to be repaired. In brief, in the case of a three-layer coating (epoxy + adhesive + topcoat), the pipe is manufactured by first coating one pipe with epoxy only. The epoxy is then heated and quenched normally. After that, the pipe is coated with the chosen factory coating material, including an adhesive and topcoat. The pipe is pre-heated to a temperature corresponding to the T_{g} of the epoxy (typically 80-120°C) and then the adhesive and topcoat are applied, e.g. in coextrusion process in order to produce a sheet which can easily be removed from the pipe as there are no bonds between the epoxy and adhesive due to "wrong" coating parameters. Thus, when the sheet is removed from the pipe for forming the patch or a blank sheet for a patch, the the pipe is heated to a temperature below Tg (e.g. 0.5 - 20 °C below) of the epoxy in order to easily remove the coating and make patches.

As appreciated by a person skilled in the art, the principle is the same for a reactive top-coat where the FC material is a "mixture" of the adhesive and the primary topcoat material.

After that, a patch is made from the sheet obtained from the pipe surface by cutting to desired size. Such pre-shaped patch can be used for making a repair to a pipe comprising the same kind of factory coating, either in the factory or on the field. The thickness of the patch is, due to effectively similar coating parameters, the same or essentially the same (within 10 %) as the thickness of the coating of the pipe to be repaired.

A coextruded sheet comprises two layers, namely an adhesive layer and a topcoat layer. Both layers may comprise polyethylene based polymers.

### Preparation of the pipe (Fig. 5, step 52)

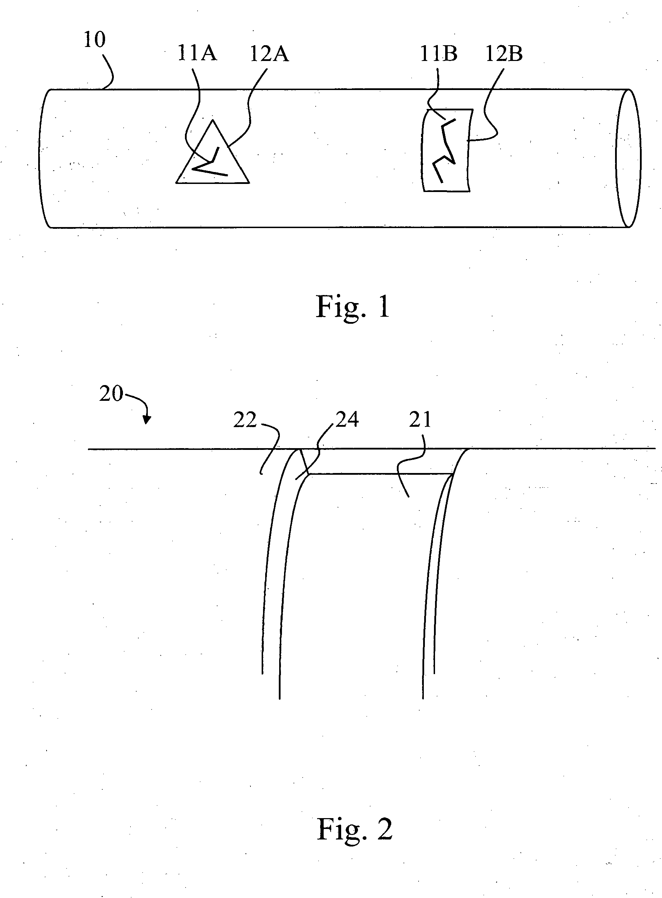

The damaged area of the pipe is prepared for application of the patch. Fig. 1 shows two damaged areas denoted with reference numerals 11A and 11B. Depending on the type of damage, that is, whether the damage extends down to bare steel or applies to surface polymer only, the procedure differs a lot. First, the worst case scenario, i.e. down to steel damage of pipe, is discussed.

The damaged area 11A, 11B which is initially irregular in shape is made more regular, for example a rectangle or triangle, in order to facilitate subsequent steps. This can be made by removing the factory coating locally around the damaged area 11A, 11B using a suitable cutting tool to form a suitable cutting line 12A, 12B. The central portion defined by the cutting line 12A, 12B is then removed in order to form an opening in the factory coating of the pipe 10. Fig. 2 shows in more detail a portion of an opening in a factory coating 22 of a pipe 20. The opening is formed down to the steel surface 21 (or alternatively to precoat, if applicable). Then, if necessary, the edges 24 of the opened area are bevelled to an sloping angle (e.g. 10 - 45°, preferably about 30°) with respect to the normal of the pipe 22 surface e.g. using an abrasive tool. The bevels can also be formed while forming the cutting lines.

Needless to say, the opening can be made according to dimensions of a pre-cut patch or, alternatively, the opening can be cut first to desired shape and the patch can be made according to dimensions of the opening.

After that, it is recommended to sandblast or slag clean the steel surface 21 achieving an anchor profile to the steel (preferably >50 µm). A steel brush can also be used. This profile-generation can also be made using a rotating brush-wheel which does not destroy the original anchor profile but is capable of removing all original remaining coatings. Grit blasting is not recommended as it may penetrate into the factory coating.

After this, the opened area is preferably cleaned, for example by using a chemical such as isopropyl alcohol or other substances capable of dissolving lipophilic contaminants, together with mechanical removal of dust. The purpose of this is to remove all contaminants, loose particles, oil, grease etc. from the area to be repaired.

### Masking of the pipe (optional step) (Fig. 5, step 53)

The surrounding factory coating of the pipe is then masked, in particular its bevels and a zone possibly overlapping with the patch. Masking is an optional step but at least if hot air blow is used in the next heating step for heating the factory coating, masking is found to be highly recommended in order to prevent oxidation and formation of carboxylic groups, which prevent good welding bonds of the polymer. Hot air blow may be needed especially when the wall thickness of steel is thin or when the factory coating is thick.

Teflon tape can be used for masking, as it withstands high temperatures.

### Heating of the pipe (Fig. 5. step 54)

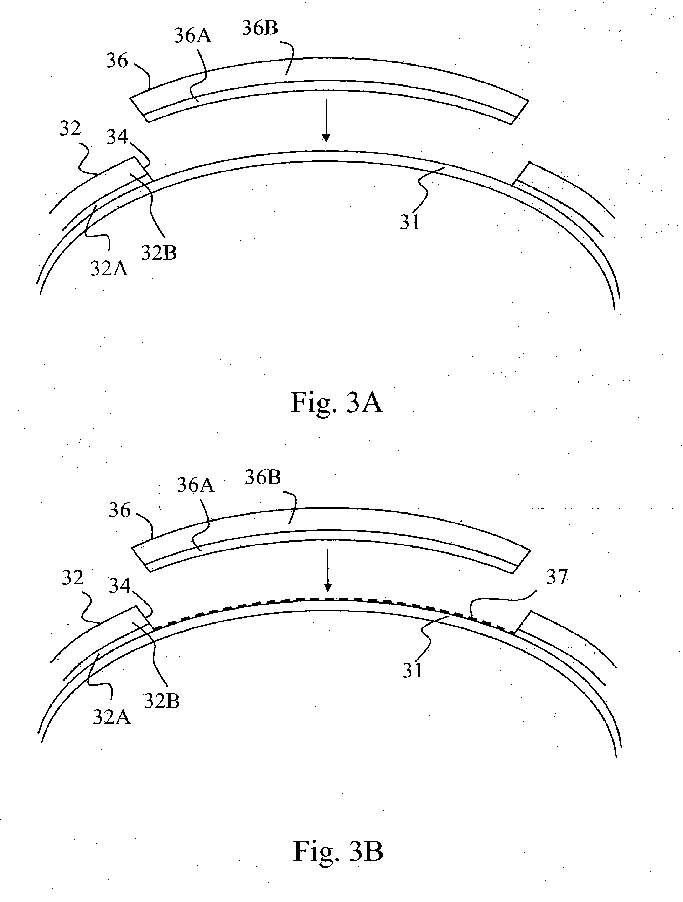

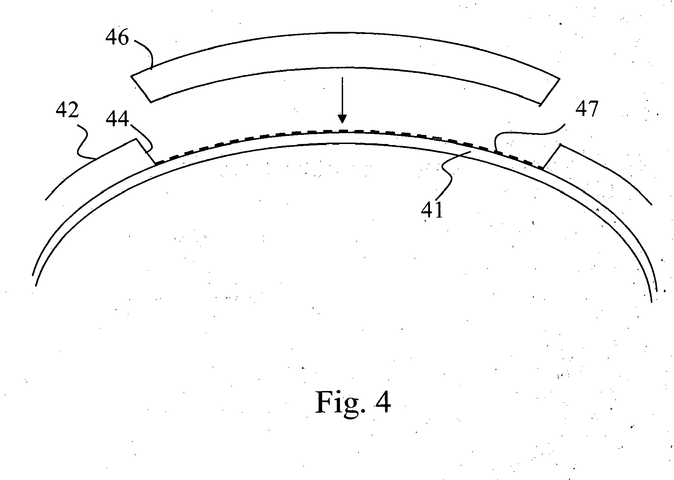

With reference next to Figs. 3A, 3B and 4, the exposed steel pipe frame 31, 41 is then locally heated. Preferably, also the polymer at the edges 34, 44 (bevels) of the factory coating 32, 42 around the exposed steel are heated too, but not as much as the steel 31, 41.

Heating can be carried out by using a propane gas torch from inside of the pipe (gas torch may produce a temperature of about 1800°C which would immediately damage the factory coating if applied directly) and/or using inductive heating from the inside or outside of the pipe. Hot air blow or infrared heating from the outside may be used as additional heating in order to raise the temperature of the factory coating to the desired level. The steel is preferably heated to a temperature of 160 - 200 °C measured on the damaged area outside the pipe. In principle a higher temperature gives better result but can cause risk damages to the factory coating, which is not desirable. The temperature of the factory coating 32, 42 on the bevel area should be higher or equal to the melting temperature of the polymer in question, in practice typically 110-130°C for PE and 140-180°C for PP.

Typically the heating process takes about 10 - 20 minutes, depending mainly on the wall thickness of the pipe.

### Heating of the patch (Fig. 5. step 57)

The patch 36, 46 is also heated before application onto the repair zone. Heating of the patch 36, 46 is preferably carried out in a suitable oven. The temperature of the oven is preferably set to 200 - 230°C, which is also the target temperature of the patch 36, 46. ,

Usually, the heating of the patch 36, 46 takes about the same time as the heating of the pipe, whereby it is advantageous to put the patch 36, 46 into the oven at the same time as the pipe heating starts. The thicknesses of the patch and the steel wall determine the corresponding durations more specifically. The temperatures achieved can be checked using gauges, for example by using an IR gauge or a conventional temperature gauge.

### Application of an epoxy precoat (optional step) (Fig. 5, step 55)

With reference to Figs. 3B and 4, according to one embodiment, an epoxy precoat 37, 47 is applied on the heated steel pipe 31, 41. This has the effect that adherence of the patch 36, 46 to the steel pipe 31, 41 is improved. In addition, as far as corrosion protection is concerned, the presence of epoxy makes the repair area similar to the factory coating. The masking is not removed until the epoxy 37, 47 is applied in order to prevent the epoxy to "contaminate" the factory coating. Epoxy can be applied in powder or liquid form onto the heated pipe just before the application of the patch in the next step. Powder epoxy has been found to be the preferred form in the case of coextruded patches 36 or reactive patches 46.

According to a preferred embodiment, the epoxy precoating is carried at two steps (two-step heating). Thus, in a first step, the steel is heated to 120 - 140°C. Then the epoxy is applied. Subsequently, heating is continued to 160 - 200°C, preferably 160 - 180°C (without epoxy, the desired temperature is about 180 - 200°C). Two-step heating has been found to deteriorate the quality of the existing factory coating least.

According to one embodiment, the patch is applied between the two steps of the two-step heating process. The final heating, and thus through curing of the epoxy takes place only after application of the patch, which is of particular significance in the case of reactive patches.

Instead of epoxies, other primers in powder or liquid form may be used.

The precoat has the effect that the adherence of the polyolefin coating is improved. In addition, the steel temperature can be kept lower, which minimizes the risk of damaging the factory coating, and the method becomes less cooling critical as will be discussed later in more detail.

### Application of the patch (coextruded or reactive pre-shaped patch) (Fig. 5. step 58)

When the steel 31, 41 and the patch 36, 46 have reached the required temperatures, the patch will be brought to the repair zone. Before that, it is recommended to check at least the factory coating bevel 34, 44 temperature and, if necessary, to add hot air heating. The mask is also removed (Fig. 5, step 56) before the application of the patch 36, 46. The patch 36, 46 is then applied to the repair zone into contact with the steel pipe 31, 41 or precoat 37, 47 and the factory coating 32, 42. In a layered structure, as shown in Figs. 3A and 3B, the sublayers of the factory coating and the patch 32A, 36A; 32B, 36B (respectively) become aligned.

Application is finalized by using a pressure roller (Fig. 5, step 60) in order to avoid entrapments and to urge the patch-polymer to penetrate everywhere at the repair zone. The pressure roller is mangled over the area of the patch 36, 46, and over the factory coating too.

A strap or the like pressure means may be used to cause pressure on the patch 36, 46 and thus to improve the bonds.

### Application of the adhesive polymer material in molten form (reactive patch extruded in situ)

The repair can be also extruded *in situ* on a precoated pipe. A hand held extruder connected to a source of reactive topcoat can be used for this. The temperature of the polymer during application in this case can be above 200 °C, as the application temperature of reactive topcoats is typically in the range of 200-250 °C.

The extruder preferably comprises a flat die whose width is set according to corresponding dimension of the repair zone.

The reactive patch can be applied on a fully heated pipe directly to the steel or on pre-heated pipe comprising an epoxy precoat, after which heating is continued (two-step heating). Thus, it should be noted that the order of application of the pipe and heating of the pipe is not crucial. According to a preferred embodiment, the pipe is, heated to at least 100 °C before application of the patch in order to prevent premature and intermediate cooling of the polymer and thus weak bonding.

In principle, application of reactive repair material in molten form is similar to application of a coextruded prefabricated patch described above but a hand-held extruder is used. Thus, molten polymer is applied directly onto the damaged area and mangled out to prevent entrapments and to ensure good welding to the factory coating with or without a primer

The reactive topcoat can comprise, for example, ME3000FC available from Borealis AG. Insulation may be used around the repair zone for a predefined period in order to maintain the temperature long enough high for the reactive bonding with the precoat to take place.

### Cooling of the pipe (Fig. 5, step 61)

After application of the patch, the pipe is cooled down. Cooling can be made passively, i.e. by letting the pipe to reach the temperature of the environment. However, it has been found that active cooling improves the bonding of the patch. In particular if an epoxy precoat is not used, heavy (shock) cooling makes the bonding very good. Cooling can be started from outside (on top of patch) until a temperature below the melting temperature of the patch polymer is achieved. After that, the cooling process is continued from the inside of the pipe, preferably with a heavy intensity. Active cooling may be carried out by enhancing cold air or gas circulation around the patch, or by using cold water or even snow or ice.

One advantage of using an epoxy precoat is that the cooling of the patch area has been found to be less critical compared with a coating process without epoxy applied.

The processes described above allow for avoiding entrapment of air and weak bonding of the patch to the repair zone, still allowing the use of very hard and rigid PE or PP materials for the repair. For example, the variation of the technique utilizing an epoxy precoat (with no post-cooling) has been found to produce a peel strength of at least 260 N/cm and even 300 N/cm or more (whereas 350 N/cm represents full cohesion). This is considerably more than what is achievable by prior techniques.

## Claims

1. A method of repairing coating of a pipe (10), the pipe (10) comprising a pipe frame (31, 41) and a polymeric coat (32; 42) around the pipe frame (31; 41) and the polymeric coat (32; 42) comprising a damaged area (11A; 11B) to be repaired, the method comprising
- preparing the pipe (10) for repair by removing coating around the damaged area of the polymeric coat (32; 42) for obtaining a repair zone (12A; 12B),
- heating the pipe (10) at the repair zone (12A; 12B) to a temperature above the melting temperature of the polymeric coat (32; 42),
- applying to the heated repair zone (12A; 12B) adhesive polymer material (36; 46) covering the entire repair zone (12A; 12B) whereby the adhesive polymer material (36; 46) bonds to the pipe (10), and
- cooling the repair zone,
wherein the adhesive polymer material (36; 46) comprises ethylene homo- or copolymers containing at least 90 % by mole of ethylene units,
**characterized in that** the adhesive polymer material (36; 46) is provided in the form of a prefabricated patch having its dimensions and curvature exactly matching the repair zone (12A; 12B) with no overlap onto the polymeric coat (32; 42) of the pipe to be repaired.

2. The method according to claim 1, **characterized in that** the adhesive polymer material (36; 46) comprises an adhesive layer (36A; 46) comprises modified polyethylene in an amount of at least 90 %, the modified polyethylene comprising
i. from 50 to 90 % by weight, preferably from 60 to 80 % by weight of a a polymer selected from homopolymers of ethylene, copolymers of ethylene and C₄ to C₁₀ alpha-olefins having a density from about 900 to 970 kg/m³, and mixtures thereof; and
ii. from 10 to 50 % by weight of an elastomer, which preferably is a copolymer of ethylene and one or more comonomers selected from C₃ to C₁₀ alpha-olefins, acrylates, methacrylates, acetates, cyclic olefins, C₆ to C₁₂ dienes and C₆ to C₁₂ trienes.

3. The method according to claim 2, **characterized in that** the adhesive polymer material (36; 46) is applied on the repair zone (12A; 12B) in reactive state.

4. The method according to claim 2, **characterized in that** the adhesive polymer material (36) comprises a topcoat layer (36B) superimposed on the adhesive layer (36A) and comprising at least 90 % of
a) low density polyethylene produced in a high pressure process,
b) a copolymer of ethylene and C₄ to C₁₀ alpha-olefins having a density from about 915 to 970 kg/m³,
c) a mixture of (a) and (b), or
d) a mixture comprising from 10 to 90 % by weight of (a), (b) or (c) and from 90 to 10 % of a modified polyethylene.,

5. The method according to claim 4, **characterized in that** the adhesive layer (36A) and topcoat layer (36B) are coextruded.

6. The method according to any of the preceding claims, **characterized in that** the adhesive polymer material (36; 46) comprises essentially the same material as the polymeric coat (32; 42) of the pipe to be repaired.

7. The method according to claim 1, **characterized in that** the patch is obtained by cutting from a coat of an epoxy pre-coated second pipe other than the pipe to be repaired, said coat comprising co-extruded or reactive polymer.

8. The method according to any of the preceding claims, **characterized in that** both the polymeric coat (32) of the pipe (10) to be repaired and the adhesive polymer material (36) comprise a coextruded sheet comprising an adhesive polymer layer (32A; 36A) and a topcoat layer (32B; 36B).

9. The method according to any of the preceding claims, **characterized by**
- heating the pipe frame (31; 41) at the repair zone (12A; 12B) to 160 - 200 °C,
- heating the adhesive polymer material (36; 46) to at least 150-250 °C,
- applying the adhesive polymer material (36; 46) to the heated repair zone (12A, 12B), and
- subjecting pressure on the adhesive polymer material (36; 46) to ensure bonding of the patch to the pipe frame (31; 41) and to the polymeric topcoat (32; 36).

10. The method according to any of the preceding claims, **characterized in that** a precoat (37), such as an epoxy precoat, is applied to the heated pipe frame (31) before application of the adhesive polymer material (36; 46).

11. The method according to claim 10, **characterized by**
- heating the pipe frame (31; 41) at the repair zone (12A; 12B) to a first temperature less than 150 °C, preferably 120 - 140 °C,
- applying an epoxy precoat (31) to the pipe at the repair zone (12A; 12B),
- applying a reactive or coextruded patch (36; 46) on the epoxy precoat (31),
- continuing heating of the pipe frame (31) to a second temperature above 150 °C, preferably 160 - 200 °C, in order to fully cure the epoxy precoat (31) and to bond the reactive patch or coextruded patch to the precoat (37) and to the topcoat (32; 42) of the pipe.

12. The method according to any of the preceding claims, **characterized by** providing to edges (34; 44) of the polymeric coat (32; 42) defining said repair area bevels of 10 - 45° with respect to the normal of the pipe surface.

13. The method according to any of the preceding claims, **characterized by** actively cooling the repair zone (12A; 12B) after application of the adhesive polymer material (36; 46) from the inside of the pipe.

## Patentansprüche

1. Ein Verfahren zur Reparatur der Beschichtung von einer Leitung (10), die Leitung (10) aufweisend einen Leitungsrahmen (31; 41) und eine Polymerschicht (32; 42) um den Leitungsrahmen (31; 41) herum und die Polymerschicht (32; 42) aufweisend einen beschädigten Bereich (11 A; 11 B), der repariert werden muss, das Verfahren aufweisend:
- Vorbereiten der Leitung (10) für eine Reparatur durch Entfernen von Beschichtung um den beschädigten Bereich von der Polymerschicht (32; 42) herum zum Erhalten einer Reparaturzone (12A; 12B),
- Erhitzen der Leitung (10) an er Reparaturzone (12A; 12B) auf eine Temperatur oberhalb der Schmelztemperatur von der Polymerschicht (32; 42),
- Auftragen von klebendem Polymerwerkstoff (36; 46) auf die erhitzte Reparaturzone (12A; 12B), welcher die gesamte Reparaturzone (12A; 12B) bedeckt, wobei der klebende Polymerwerkstoff (36; 46) sich mit der Leitung (10) verbindet, und
- Abkühlen der Reparaturzone,
wobei der klebende Polymerwerkstoff (36; 46) Ethylenhomo- oder Copolymere aufweist, die mindestens 90 mol-% Ethyleneinheiten beinhalten,
**dadurch gekennzeichnet, dass** der klebende Polymerwerkstoff (36; 46) in der Form eines vorgefertigten Flickens bereitgestellt ist, dessen Dimensionen und Kurvatur genau mit der Reparaturzone (12A; 12B) übereinstimmen ohne Überlappung auf der Polymerschicht (32; 42) von der Leitung, die repariert werden muss.

2. Das Verfahren gemäß Anspruch 1, **dadurch gekennzeichnet, dass** der klebende Polymerwerkstoff (36; 46) eine Klebeschicht (36A; 46) aufweist, die modifiziertes Polyethylen in einer Menge von mindestens 90% aufweist, das modifizierte Polyethylen aufweisend:
i. von 50 bis 90 Gew.-%, vorzugsweise von 60 bis 80 Gew.-%, von einem Polymer ausgewählt von Homopolymeren des Ethylens, Copolymeren des Ethylens und C₄ bis C₁₀ Alpha-Olefinen mit einer Dichte von ungefähr 900 bis 970 kg/m³ sowie Mischungen davon; und
ii. von 10 bis 50 Gew.-% von einem Elastomer, welches vorzugsweise ein Copolymer des Ethylens ist, und einem oder mehreren Comonomeren ausgewählt von C₃ bis C₁₀ Alphas-Olefinen, Acrylaten, Methacrylaten, Acetaten, Cycloolefinen, C₆ bis C₁₂ Dienen und C₆ bis C₁₂ Trienen.

3. Das Verfahren gemäß Anspruch 2, **dadurch gekennzeichnet, dass** der klebende Polymerwerkstoff (36; 46) in einem reaktiven Zustand auf die Reparaturzone (12A; 12B) aufgetragen wird.

4. Das Verfahren gemäß Anspruch 2, **dadurch gekennzeichnet, dass** der klebende Polymerwerkstoff (36) eine Deckschicht (36B) aufweist, die auf die Klebeschicht (36A) aufgebracht ist und aufweisend mindestens 90% von:
a) Polyethylen niedriger Dichte hergestellt in einem Hochdruckprozess,
b) einem Copolymer des Ethylen und C₄ bis C₁₀ Alpha-Olefinen mit einer Dichte von ungefähr 915 bis 970 kg/m³,
c) einer Mischung von (a) und (b), oder
d) einer Mischung aufweisend von 10 bis 90 Gew.-% von (a), (b) oder (c) und von 90 bis 10% von einem modifizierten Polyethylen.

5. Das Verfahren gemäß Anspruch 4, **dadurch gekennzeichnet, dass** die Klebeschicht (36A) und die Deckschicht (36B) coextrudiert sind.

6. Das Verfahren gemäß einem der vorangegangenen Ansprüche, **dadurch gekennzeichnet, dass** der klebende Polymerwerkstoff (36; 46) im Wesentlichen denselben Werkstoff aufweist wie die Polymerschicht (32; 42) von der Leitung, die repariert werden muss.

7. Das Verfahren gemäß Anspruch 1, **dadurch gekennzeichnet, dass** der Flicken erhalten wird durch Schneiden aus einer Schicht von einer Epoxid-vorbeschichteten zweiten Leitung, anders als die Leitung, die repariert werden muss, die besagte Schicht aufweisend ein coextrudiertes oder reaktives Polymer.

8. Das Verfahren gemäß einem der vorangegangenen Ansprüche, **dadurch gekennzeichnet, dass** sowohl die Polymerschicht (32) von der Leitung (10), die repariert werden muss, als auch der klebende Polymerwerkstoff (36) eine coextrudierte Platte aufweisen, aufweisend eine Klebepolymerschicht (32A; 36A) und eine Deckschicht (32B; 36B).

9. Das Verfahren gemäß einem der vorangegangenen Ansprüche, **gekennzeichnet durch**
- Erhitzen des Leitungsrahmens (31; 41) an der Reparaturzone (12A; 12B) auf 160 - 200°C,
- Erhitzen des klebenden Polymerwerkstoffs (36; 46) auf mindestens 150 - 250°C,
- Auftragen des klebenden Polymerwerkstoffs (36; 46) auf die erhitzte Reparaturzone (12A; 12B), und
- Ausüben von Druck auf den klebenden Polymerwerkstoff (36; 46), um eine Verbindung von dem Flicken mit dem Leitungsrahmen (31; 41) und mit der Polymerdeckschicht (32; 36) sicherzustellen.

10. Das Verfahren gemäß einem der vorangegangenen Ansprüche, **dadurch gekennzeichnet, dass** eine Vorbeschichtung (37), wie eine Epoxidvorbeschichtung, auf den erhitzten Leitungsrahmen (31) aufgetragen wird vor einer Auftragung von dem klebenden Polymerwerkstoff (36; 46).

11. Das Verfahren gemäß Anspruch 10, **gekennzeichnet durch**:
- Erhitzen des Leitungsrahmens (31; 41) an der Reparaturzone (12A; 12B) auf eine erste Temperatur geringer als 150°C, vorzugsweise 120 - 140°C,
- Auftragen einer Epoxidvorbeschichtung (31) auf die Leitung an der Reparaturzone (12A; 12B),
- Auftragen eines reaktiven oder coextrudierten Flickens (36; 46) auf die Epoxidvorbeschichtung (31),
- Weiter Erhitzen des Leitungsrahmens (31) auf eine zweite Temperatur oberhalb von 150°C, vorzugsweise 160 - 200°C, um die Epoxidvorbeschichtung (31) ganz auszuhärten und um den reaktiven Flicken oder den coextrudierten Flicken mit der Vorbeschichtung (37) und mit der Deckschicht (32; 42) von der Leitung zu verbinden.

12. Das Verfahren gemäß einem der vorangegangenen Ansprüche, **gekennzeichnet durch** Bereitstellen von Abschrägungen von 10 - 45° mit Bezug auf die Normale von der Leitungsoberfläche an den Kanten (34; 44) von der Polymerschicht (32; 42), welche den besagten Reparaturbereich definieren.

13. Das Verfahren gemäß einem der vorangegangenen Ansprüche, **gekennzeichnet durch** aktives Abkühlen der Reparaturzone (12A; 12B) nach dem Auftragen von dem klebenden Polymerwerkstoff (36; 46) von der Innenseite der Leitung.

## Revendications

1. Procédé de réparation d'un revêtement de tuyau (10), le tuyau (10) comprenant un châssis tubulaire (31, 41) et une couche de polymère (32 ; 42) autour du châssis tubulaire (31 ; 41) et la couche de polymère (32 ; 42) comprenant une zone endommagée (11A ; 11B) à réparer, le procédé comprenant les étapes consistant à :
- préparer le tuyau (10) pour la réparation en retirant le revêtement autour de la zone endommagée de la couche de polymère (32 ; 42) pour obtenir une zone de réparation (12A ; 12B),
- chauffer le tuyau (10) dans la zone de réparation (12A ; 12B) à une température supérieure à la température de fusion de la couche de polymère (32 ; 42),
- appliquer à la zone de réparation chauffée (12A ; 12B) un matériau polymère adhésif (36 ; 46) recouvrant la totalité de la zone de réparation (12A ; 12B) de sorte que le matériau polymère adhésif (36 ; 46) se lie au tuyau (10) et
- refroidir la zone de réparation,
dans lequel le matériau polymère adhésif (36 ; 46) comprend des homo- ou copolymères d'éthylène contenant au moins 90 % en mole d'unités d'éthylène,
**caractérisé en ce que** le matériau polymère adhésif (36 ; 46) est présent sous la forme d'une pièce rapportée préfabriquée dont les dimensions et la courbure correspondent exactement à la zone de réparation (12A ; 12B) sans aucun chevauchement sur la couche de polymère (32 ; 42) du tuyau à réparer.

2. Procédé selon la revendication 1, **caractérisé en ce que** le matériau polymère adhésif (36 ; 46) comprend une couche adhésive (36A ; 46) comprenant du polyéthylène modifié en quantité d'au moins 90 %, le polyéthylène modifié comprenant :
i. 50 à 90 % en poids, de préférence 60 à 80 % en poids, d'un polymère choisi parmi les homopolymères d'éthylène, les copolymères d'éthylène et les alpha-oléfines en C₄ à C₁₀ ayant une masse volumique allant d'environ 900 à 970 kg/m³, ainsi que leurs mélanges ; et
ii. 10 à 50 % en poids d'un élastomère, qui est de préférence un copolymère d'éthylène et d'un ou plusieurs comonomères choisis parmi les alpha-oléfines en C₃ à C₁₀, les acrylates, les méthacrylates, les acétates, les oléfines cycliques, les diènes en C₆ à C₁₂ et les triènes en C₆ à C₁₂.

3. Procédé selon la revendication 2, **caractérisé en ce que** le matériau polymère adhésif (36 ; 46) est appliqué sur la zone de réparation (12A ; 12B) à l'état réactif.

4. Procédé selon la revendication 2, **caractérisé en ce que** le matériau polymère adhésif (36) comprend une couche de revêtement supérieure (36B) superposée à la couche adhésive (36A) et comprenant au moins 90 % :
a) d'un polyéthylène de basse densité produit dans un procédé sous pression élevée,
b) d'un copolymère d'éthylène et d'alpha-oléfines en C₄ à C₁₀ ayant une masse volumique d'environ 915 à 970 kg/m³,
c) d'un mélange de (a) et (b) ou
d) d'un mélange comprenant 10 à 90 % en poids de (a), (b) ou (c) et 90 à 10 % d'un polyéthylène modifié.

5. Procédé selon la revendication 4, **caractérisé en ce que** la couche adhésive (36A) et la couche de revêtement supérieure (36B) sont co-extrudées.

6. Procédé selon l'une quelconque des revendications précédentes, **caractérisé en ce que** le matériau polymère adhésif (36 ; 46) comprend essentiellement le même matériau que la couche de polymère (32 ; 42) du tuyau à réparer.

7. Procédé selon la revendication 1, **caractérisé en ce que** la pièce rapportée est obtenue en découpant dans une couche d'un second tuyau pré-revêtu d'époxyde autre que le tuyau à réparer, ladite couche comprenant un polymère co-extrudé ou réactif.

8. Procédé selon l'une quelconque des revendications précédentes, **caractérisé en ce qu'**à la fois la couche de polymère (32) du tuyau (10) à réparer et le matériau polymère adhésif (36) comprennent une feuille co-extrudée comprenant une couche de polymère adhésif (32A ; 36A) et une couche de revêtement supérieure (32B ; 36B).

9. Procédé selon l'une quelconque des revendications précédentes, **caractérisé par** les étapes consistant à :
- chauffer le châssis tubulaire (31 ; 41) dans la zone de réparation (12A ; 12B) à une température de 160 à 200 °C,
- chauffer le matériau polymère adhésif (36 ; 46) à au moins 150 à 250 °C,
- appliquer le matériau polymère adhésif (36 ; 46) à la zone de réparation chauffée (12A, 12B), et
- soumettre à une pression le matériau polymère adhésif (36 ; 46) pour assurer la liaison de la pièce rapportée au châssis tubulaire (31 ; 41) et à la couche de revêtement supérieure de polymère (32 ; 36).

10. Procédé selon l'une quelconque des revendications précédentes, **caractérisé en ce qu'**une pré-couche (37), telle qu'une pré-couche d'époxyde, est appliquée au châssis tubulaire chauffé (31) avant application du matériau polymère adhésif (36 ; 46).

11. Procédé selon la revendication 10, **caractérisé par** les étapes consistant à :
- chauffer le châssis tubulaire (31 ; 41) dans la zone de réparation (12A ; 12B) à une première température inférieure à 150 °C, de préférence de 120 à 140 °C,
- appliquer une pré-couche d'époxyde (31) au tuyau dans la zone de réparation (12A ; 12B),
- appliquer une pièce rapportée réactive ou co-extrudée (36 ; 46) sur la pré-couche d'époxyde (31),
- continuer à chauffer le châssis tubulaire (31) à une seconde température supérieure à 150 °C, de préférence de 160 à 200 °C, pour durcir complètement la pré-couche d'époxyde (31) et lier la pièce rapportée réactive ou la pièce rapportée co-extrudée à la pré-couche (37) et à la couche supérieure (32 ; 42) du tuyau.

12. Procédé selon l'une quelconque des revendications précédentes, **caractérisé en ce que** l'on façonne sur les bords (34 ; 44) de la couche de polymère (32 ; 42) définissant ladite zone de réparation des biseaux de 10 à 45° par rapport à la normale de la surface du tuyau.

13. Procédé selon l'une quelconque des revendications précédentes, **caractérisé en ce que** l'on refroidit activement la zone de réparation (12A ; 12B) après l'application du matériau polymère adhésif (36 ; 46) de l'intérieur du tuyau.
